# EUROPÄISCHE PATENTSCHRIFT

(11) **EP 3 148 857 B1**
(45) Veröffentlichungstag und Bekanntmachung des Hinweises auf die Patenterteilung: **28.02.2018**
(21) Anmeldenummer: 15719246.9
(22) Anmeldetag: 05.05.2015
(51) Int. Cl.: B60W 50/023, G05D 1/00, G05D 1/02, G08G 1/16, B60W 50/02, B60W 50/029, B60W 50/00

(54) **FAHRZEUGSTEUERSYSTEM FÜR EINE AUTONOME FÜHRUNG EINES FAHRZEUGS**
VEHICLE CONTROL SYSTEM FOR AUTONOMOUSLY GUIDING A VEHICLE
SYSTÈME DE COMMANDE DE VÉHICULE POUR GUIDER UN VÉHICULE DE FAÇON AUTONOME

(30) Priorität: 27.05.2014 DE 102014210147
(43) Veröffentlichungstag der Anmeldung: 05.04.2017
(73) Patentinhaber: Continental Teves AG & Co. OHG, 60488 Frankfurt (DE); Conti Temic Microelectronic GmbH, 90411 Nürnberg (DE)
(72) Erfinder: FENDT, Günter Anton, 86529 Schrobenhausen (DE); STÄHLIN, Ulrich, 65760 Eschborn (DE); SCHMID, Bernhard, 61169 Friedberg (DE); MENZEL, Marc, 35096 Weimar (Lahn) (DE)
(74) Vertreter: Büchner, Jörg
(86) Internationale Anmeldenummer: PCT/EP2015/059806
(87) Internationale Veröffentlichungsnummer: WO 2015/180931

(56) Entgegenhaltungen:
- DE-A1-102012 009 238
- DE-A1-102012 100 164
- US-A1- 2008 189 009
- US-A1- 2009 140 872
- US-A1- 2013 024 084

## Beschreibung

Die Erfindung betrifft das Gebiet der autonomen Fahrzeugführung.

Im Bereich der automatisierten Verkehrssteuerung ist die autonome Führung von Fahrzeugen von besonderem Interesse. Die autonome Führung von Fahrzeugen kann dabei teilautonom oder vollautonom erfolgen.

Bei der teilautonomen Führung kann der Fahrer des Fahrzeugs bei der Fahrzeugführung, beispielsweise in Stauszenarien, unterstützt werden. Bei der vollautonomen Führung kann das Fahrzeug selbstständig im Verkehr manövrieren und somit den Fahrer des Fahrzeugs vollständig entlasten.

Zur teilautonomen oder vollautonomen Führung eines Fahrzeugs wird üblicherweise eine Mehrzahl von Sensoren des Fahrzeugs eingesetzt. Unter Verwendung einer Sensordatenfusion kann das Fahrzeug folglich teilautonom oder vollautonom im Verkehr geführt werden. Im Falle einer Fehlfunktion eines Sensors kann jedoch die Situation eintreten, dass die Sensordatenfusion nicht mehr durchgeführt werden kann und somit eine teilautonome oder vollautonome Führung des Fahrzeugs nicht mehr möglich ist.

In diesem Fall wird die Führung des Fahrzeugs üblicherweise an den Fahrer des Fahrzeugs übergeben. Dies ist typischerweise mit einer hohen Zeitverzögerung verbunden, welche insbesondere bei hohen Fahrzeuggeschwindigkeiten problematisch sein kann. Alternativ kann das Fahrzeug selbstständig zum Stillstand gebracht werden, wobei das Fahrzeug in diesem Falle ein Hindernis für weitere Fahrzeuge darstellen kann. Dies ist mit einem Effizienzverlust im Bereich der automatisierten Verkehrssteuerung verbunden.

In DE 10 2009 050 399 A1 ist ein Verfahren zur Steuerung des Betriebs eines vollautomatischen, zur unabhängigen Fahrzeugführung ausgebildeten Fahrerassistenzsystems eines Kraftfahrzeugs beschrieben.

Aus der DE 10 2012 100 164 A1 geht ein Fahrzeug-Quersteuerungssystem hervor, welches ein Fahrspurmarkermodul umfasst, das zum Bestimmen einer Fahrtrichtung und einer Abweichung eines Fahrzeugs in Reaktion auf Bilder, die von einem zweiten Sensorgerät empfangen werden, konfiguriert ist. Weiterhin weist das Quersteuerungssystem ein Fahrspurinformations-Fusionsmodul, das zum Erzeugen von Fahrzeug- und Fahrspurinformationen in Reaktion auf Daten, die von heterogenen Fahrzeugsensoren empfangen werden, konfiguriert ist, und eine Fahrspursteuerung, die zum Erzeugen eines kollisionsfreien Fahrzeugweges in Reaktion auf die Fahrzeug- und Fahrspurinformationen von dem Fahrspurinformations-Fusionsmodul und einer Objektkarte konfiguriert ist, auf.

Es ist daher die Aufgabe der vorliegenden Erfindung, ein effizientes Konzept zur autonomen Führung eines Fahrzeugs zu schaffen.

Diese Aufgabe wird durch die Merkmale der unabhängigen Ansprüche gelöst. Vorteilhafte Ausführungsformen der Erfindung sind Gegenstand der Beschreibung, der Figuren sowie der abhängigen Ansprüche.

Die vorliegende Erfindung basiert auf der Erkenntnis, dass die obige Aufgabe durch ein Fahrzeugsteuersystem gelöst werden kann, welches eine autonome Führung des Fahrzeugs unter Verwendung von Sensoren des Fahrzeugs ermöglicht und ausgebildet ist, eine Fehlfunktion eines Sensors des Fahrzeugs zu erfassen. Ansprechend hierauf kann das Fahrzeugsteuersystem ein Hilfssensorsignal über ein Kommunikationsnetzwerk anfordern und empfangen. Dadurch wird erreicht, dass eine autonome Führung des Fahrzeugs bei einer Fehlfunktion eines Sensors des Fahrzeugs unter Verwendung des Hilfssensorsignals möglich wird. Gemäß einer Ausführungsform wird das Hilfssensorsignal von einem Führungsfahrzeug bereitgestellt und an das Fahrzeugsteuersystem übertragen. Somit kann ein virtuelles Abschleppen des Fahrzeugs durch das Führungsfahrzeug realisiert werden.

Gemäß einem ersten Aspekt betrifft die Erfindung ein Fahrzeugsteuersystem für eine autonome Führung eines Fahrzeugs, mit einer Steuerung zum autonomen Führen des Fahrzeugs auf der Basis eines Sensorsignals eines Sensors des Fahrzeugs, wobei die Steuerung ausgebildet ist, eine Fehlfunktion des Sensors des

Fahrzeugs zu erfassen, und einer Kommunikationsschnittstelle, welche ausgebildet ist, ansprechend auf die Erfassung der Fehlfunktion des Sensors durch die Steuerung ein Hilfssensorsignal über ein Kommunikationsnetzwerk anzufordern und das angeforderte Hilfssensorsignal über das Kommunikationsnetzwerk zu empfangen, wobei die Steuerung ausgebildet ist, das Fahrzeug auf der Basis des empfangenen Hilfssensorsignals autonom zu führen. Dadurch wird der Vorteil erreicht, dass ein effizientes Konzept zur autonomen Führung des Fahrzeugs realisiert werden kann.

Das Fahrzeugsteuersystem kann Teil eines Fahrerassistenzsystems des Fahrzeugs sein oder ein Fahrerassistenzsystem des Fahrzeugs bilden. Das Fahrzeugsteuersystem kann mit einem Aktor des Fahrzeugs zur Längsführung und/oder Querführung des Fahrzeugs verbunden sein. Das Fahrzeug kann beispielsweise ein Personenkraftwagen (PKW) oder ein Lastkraftwagen (LKW) sein.

Der Sensor des Fahrzeugs kann einen RADAR-Sensor (Radio Detection and Ranging Sensor), einen LIDAR-Sensor (Light Detection and Ranging Sensor), einen Ultraschall-Sensor, oder eine Bildkamera zum Erfassen einer Umgebung des Fahrzeugs umfassen. Die Fehlfunktion des Sensors kann ein teilweiser Defekt oder ein vollständiger Defekt des Sensors sein.

Das Kommunikationsnetzwerk kann ein ITS-G5 (Intelligent Transport Systems G5) Kommunikationsnetzwerk, ein Mobilfunk Kommunikationsnetzwerk, ein WLAN (Wireless Local Area Network) Kommunikationsnetzwerk, ein Bluetooth Kommunikationsnetzwerk oder ein UWB (Ultra Wide Band) Kommunikationsnetzwerk sein. Das Kommunikationsnetzwerk kann durch das Internet gebildet sein oder an das Internet angebunden sein.

Das Kommunikationsnetzwerk kann ferner einen Backend-Server umfassen. Eine Kommunikationsverbindung über das Kommunikationsnetzwerk kann über den Backend-Server durchgeführt werden.

Die autonome Führung des Fahrzeugs kann auf einer Sensordatenfusion basieren. Die autonome Führung des Fahrzeugs kann ferner auf einem Ansatz zur simultanen Lokalisierung und Kartenerstellung (Simultaneous Localization and Mapping, SLAM) basieren. Die autonome Führung des Fahrzeugs kann unter Verwendung des Sensorsignals oder des Hilfssensorsignals durchgeführt werden.

Gemäß einer Ausführungsform weist die Steuerung eine Sensorschnittstelle zum Empfangen des Sensorsignals auf und ist ausgebildet, die Fehlfunktion des Sensors des Fahrzeugs bei Ausbleiben eines Empfangs des Sensorsignals zu erfassen. Dadurch wird der Vorteil erreicht, dass die Fehlfunktion des Sensors effizient erfasst werden kann.

Die Fehlfunktion des Sensors kann ferner bei Ausbleiben eines Empfangs des Sensorsignals für eine vorbestimmte Zeitdauer erfasst werden. Die vorbestimmte Zeitdauer kann beispielsweise 1 Millisekunde, 5 Millisekunden, 10 Millisekunden, 50 Millisekunden, 100 Millisekunden, 500 Millisekunden, 1 Sekunde, 5 Sekunden oder 10 Sekunden sein.

Gemäß einer Ausführungsform ist die Kommunikationsschnittstelle ausgebildet, das Hilfssensorsignal über das Kommunikationsnetzwerk von einem Führungsfahrzeug anzufordern und das Hilfssensorsignal über das Kommunikationsnetzwerk von dem Führungsfahrzeug zu empfangen. Dadurch wird der Vorteil erreicht, dass ein Führungsfahrzeug zum Bereitstellen des Hilfssensorsignals eingesetzt werden kann.

Das Führungsfahrzeug kann beispielsweise ein Personenkraftwagen (PKW) oder ein Lastkraftwagen (LKW) sein. Das Führungsfahrzeug kann einen Hilfssensor zum Bereitstellen des Hilfssensorsignals umfassen. Der Hilfssensor kann eine Umgebung des Fahrzeugs und/oder des Führungsfahrzeugs erfassen. Das Führungsfahrzeug kann ferner eine weitere Kommunikationsschnittstelle zur Kommunikation mit dem Fahrzeug über das Kommunikationsnetzwerk aufweisen. Das Führungsfahrzeug kann manuell, teilautonom oder vollautonom geführt sein.

Gemäß einer Ausführungsform ist die Steuerung ausgebildet, eine Mehrzahl geographischer Lagen einer Mehrzahl von Fahrzeugen in der Umgebung des Fahrzeugs zu erfassen und ein Führungsfahrzeug aus der Mehrzahl von Fahrzeugen auf Basis der Mehrzahl geographischer Lagen auszuwählen. Dadurch wird der Vorteil erreicht, dass ein Führungsfahrzeug effizient ausgewählt werden kann.

Die Mehrzahl geographischer Lagen kann geographische Längengrade und/oder geographische Breitengrade umfassen. Das Führungsfahrzeug kann derart ausgewählt werden, dass das Führungsfahrzeug den kleinsten Abstand zu dem Fahrzeug aufweist. Ferner kann das Führungsfahrzeug derart ausgewählt werden, dass das Führungsfahrzeug dem Fahrzeug unmittelbar vorausfährt.

Gemäß einer Ausführungsform ist die Kommunikationsschnittstelle ausgebildet, eine Mehrzahl von Lageindikatoren über das Kommunikationsnetzwerk zu empfangen, wobei die Mehrzahl von Lageindikatoren die Mehrzahl geographischer Lagen der Mehrzahl von Fahrzeugen anzeigt, und ist die Steuerung ausgebildet, die Mehrzahl geographischer Lagen auf der Basis der Mehrzahl von Lageindikatoren zu erfassen. Dadurch wird der Vorteil erreicht, dass die Mehrzahl geographischer Lagen effizient bestimmt werden kann.

Die Mehrzahl von Lageindikatoren kann Decentralized Environmental Notification Message (DENM) Kommunikationsnachrichten oder Cooperative Awareness Message (CAM) Kommunikationsnachrichten umfassen.

Gemäß einer Ausführungsform ist die Kommunikationsschnittstelle ausgebildet, einen Fahrroutenindikator von einem Führungsfahrzeug über das Kommunikationsnetzwerk zu empfangen, wobei der Fahrroutenindikator eine Fahrroute des Führungsfahrzeugs angibt, und ist die Steuerung ausgebildet, eine Fahrroute des Fahrzeugs auf der Basis des Fahrroutenindikators autonom zu bestimmen. Dadurch wird der Vorteil erreicht, dass das Fahrzeug dem Führungsfahrzeug effizient folgen kann.

Der Fahrroutenindikator kann einen Verlauf und/oder einen Zielpunkt der Fahrroute des Führungsfahrzeugs anzeigen. Die Fahrroute des Fahrzeugs kann auf Grundlage des Verlaufs und/oder des Zielpunkts der Fahrroute des Führungsfahrzeugs autonom bestimmt werden.

Gemäß einer Ausführungsform ist die Kommunikationsschnittstelle ausgebildet, einen Geschwindigkeitsindikator oder einen Beschleunigungsindikator eines Führungsfahrzeugs von einem Führungsfahrzeug über das Kommunikationsnetzwerk zu empfangen, und ist die Steuerung ausgebildet, das Fahrzeug auf der Basis des Geschwindigkeitsindikators oder des Beschleunigungsindikators autonom zu führen. Dadurch wird der Vorteil erreicht, dass die Fahrdynamik des Führungsfahrzeugs bei der autonomen Führung des Fahrzeugs berücksichtigt werden kann.

Der Geschwindigkeitsindikator kann eine Augenblicksgeschwindigkeit des Führungsfahrzeugs anzeigen. Der Beschleunigungsindikator kann eine Augenblicksbeschleunigung des Führungsfahrzeugs anzeigen.

Gemäß einer Ausführungsform ist die Steuerung ausgebildet, einen Grad der Fehlfunktion des Sensors zu erfassen, um einen Fehlfunktionsgradindikator zu erhalten, und ist die Kommunikationsschnittstelle ausgebildet, den Fehlfunktionsgradindikator über das Kommunikationsnetzwerk zusammen mit der Anforderung des Hilfssensorsignals auszusenden. Dadurch wird der Vorteil erreicht, dass das Hilfssensorsignal in Abhängigkeit des Grades der Fehlfunktion des Sensors bereitgestellt werden kann.

Der Fehlfunktionsgradindikator kann diskret sein. Der Fehlfunktionsindikator kann beispielsweise eine leichte Fehlfunktion, eine mittlere Fehlfunktion oder eine schwere Fehlfunktion des Sensors anzeigen.

Gemäß einer Ausführungsform ist die Kommunikationsschnittstelle ausgebildet, eine authentifizierte und/oder verschlüsselte Kommunikationsverbindung über das Kommunikationsnetzwerk, insbesondere zwischen dem Fahrzeug und einem Führungsfahrzeug, aufzubauen. Dadurch wird der Vorteil erreicht, dass das Hilfssensorsignal effizient übertragen werden kann.

Der Aufbau der authentifizierten und/oder verschlüsselten Kommunikationsverbindung kann beispielsweise auf Grundlage des Standards AutoSAR Version 4.2.1 durchgeführt werden. Eine Kommunikation über die Kommunikationsverbindung kann unter Verwendung einer Vorwärtsfehlerkorrektur (Forward Error Correction, FEC) durchgeführt werden.

Gemäß einer Ausführungsform umfasst das Fahrzeug einen weiteren Sensor, und ist die Steuerung ausgebildet, das Fahrzeug auf der Basis eines weiteren Sensorsignals des weiteren Sensors des Fahrzeugs autonom zu führen. Dadurch wird der Vorteil erreicht, dass das Fahrzeug unter Verwendung des Hilfssensorsignals und des weiteren Sensorsignals autonom geführt werden kann.

Die autonome Führung des Fahrzeugs kann auf einer Sensordatenfusion basieren. Die autonome Führung des Fahrzeugs kann ferner auf einem Ansatz zur simultanen Lokalisierung und Kartenerstellung (Simultaneous Localization and Mapping, SLAM) basieren. Das Hilfssensorsignal und das weitere Sensorsignal können hierfür gemeinsam verarbeitet werden.

Gemäß einer Ausführungsform ist die Steuerung ausgebildet, ansprechend auf die Erfassung der Fehlfunktion des Sensors einen Fehlfunktionsindikator zu erzeugen, welcher die Fehlfunktion des Sensors anzeigt, und ist die Kommunikationsschnittstelle ausgebildet, den Fehlfunktionsindikator über das Kommunikationsnetzwerk an einen Backend-Server auszusenden. Dadurch wird der Vorteil erreicht, dass eine Fehlfunktion eines Sensors des Fahrzeugs an einen Backend-Server gemeldet werden kann.

Der Fehlfunktionsindikator kann eine Decentralized Environmental Notification Message (DENM) Kommunikationsnachricht oder eine Cooperative Awareness Message (CAM) Kommunikationsnachricht umfassen. Der Backend-Server kann einen Verkehrstelematik-Server oder einen Rettungsleitstellen-Server umfassen.

Gemäß einer Ausführungsform umfasst das Sensorsignal oder das Hilfssensorsignal ein RADAR-Sensorsignal, ein LIDAR-Sensorsignal, ein Ultraschall-Sensorsignal, oder ein Bildkamera-Sensorsignal. Dadurch wird der Vorteil erreicht, dass die Umgebung des Fahrzeugs effizient erfasst und angezeigt werden kann.

Das Sensorsignal kann durch den Sensor des Fahrzeugs bereitgestellt werden. Das Hilfssensorsignal kann durch einen Sensor eines Führungsfahrzeugs bereitgestellt werden.

Gemäß einer Ausführungsform umfasst die Kommunikationsschnittstelle eine ITS-G5 Kommunikationsschnittstelle, eine Mobilfunk Kommunikationsschnittstelle, eine WLAN Kommunikationsschnittstelle, eine Bluetooth Kommunikationsschnittstelle, oder eine UWB Kommunikationsschnittstelle. Dadurch wird der Vorteil erreicht, dass eine Kommunikation über das Kommunikationsnetzwerk effizient realisiert werden kann.

Die ITS-G5 Kommunikationsschnittstelle kann auf Grundlage des Standards ETSI EN 302 665 realisiert werden. Die Mobilfunk Kommunikationsschnittstelle kann eine GSM (Global System for Mobile Communications) Kommunikationsschnittstelle, eine UMTS (Universal Mobile Telecommunications System) Kommunikationsschnittstelle, oder eine LTE (Long Term Evolution) Kommunikationsschnittstelle umfassen.

Die WLAN Kommunikationsschnittstelle kann auf dem Standard IEEE 802.11 basieren. Die Bluetooth Kommunikationsschnittstelle kann auf dem Standard IEEE 802.15.1 basieren. Die UWB Kommunikationsschnittstelle kann auf dem Standard IEEE 802.15.4a basieren.

Gemäß einem zweiten Aspekt betrifft die Erfindung ein Verfahren für eine autonome Führung eines Fahrzeugs, mit einem autonomen Führen des Fahrzeugs auf der Basis eines Sensorsignals eines Sensors des Fahrzeugs, einem Erfassen einer Fehlfunktion des Sensors des Fahrzeugs, ansprechend auf die Erfassung der Fehlfunktion des Sensors, einem Anfordern eines Hilfssensorsignals über ein Kommunikationsnetzwerk, einem Empfangen des angeforderten Hilfssensorsignals über das Kommunikationsnetzwerk, und einem autonomen Führen des Fahrzeugs auf der Basis des empfangenen Hilfssensorsignals. Dadurch wird der Vorteil erreicht, dass ein effizientes Konzept zur autonomen Führung des Fahrzeugs realisiert werden kann.

Das Verfahren kann mittels des Fahrzeugsteuersystems ausgeführt werden. Weitere Merkmale des Verfahrens ergeben sich unmittelbar aus der Funktionalität des Fahrzeugsteuersystems.

Gemäß einer Ausführungsform wird das Hilfssensorsignal über das Kommunikationsnetzwerk von einem Führungsfahrzeug angefordert, und wird das Hilfssensorsignal über das Kommunikationsnetzwerk von dem Führungsfahrzeug empfangen. Dadurch wird der Vorteil erreicht, dass ein Führungsfahrzeug zum Bereitstellen des Hilfssensorsignals eingesetzt werden kann.

Gemäß einem dritten Aspekt betrifft die Erfindung ein Computerprogramm mit einem Programmcode zum Ausführen des Verfahrens, wenn das Computerprogramm auf einem Computer ausgeführt wird. Dadurch wird der Vorteil erreicht, dass das Verfahren automatisiert und wiederholbar ausgeführt werden kann.

Das Computerprogramm kann durch das Fahrzeugsteuersystem ausgeführt werden. Das Fahrzeugsteuersystem kann hierfür programmtechnisch eingerichtet sein.

Die Erfindung kann in Software und/oder in Hardware realisiert werden.

Weitere Ausführungsbeispiele werden bezugnehmend auf die beiliegenden Figuren näher erläutert. Es zeigen:
Fig. 1 ein Diagramm eines Fahrzeugsteuersystems für eine autonome Führung eines Fahrzeugs gemäß einer Ausführungsform;
Fig. 2 ein Diagramm eines Verfahrens für eine autonome Führung eines Fahrzeugs gemäß einer Ausführungsform; und
Fig. 3 ein Diagramm eines Kommunikationssystems für eine autonome Führung eines Fahrzeugs unter Verwendung eines Führungsfahrzeugs gemäß einer Ausführungsform.

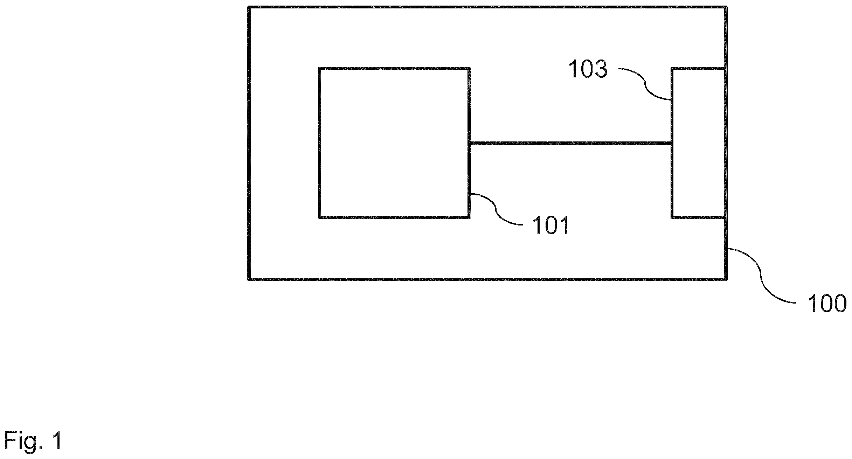

Fig. 1 zeigt ein Diagramm eines Fahrzeugsteuersystems 100 für eine autonome Führung eines Fahrzeugs gemäß einer Ausführungsform.

Das Fahrzeugsteuersystem 100 umfasst eine Steuerung 101 zum autonomen Führen des Fahrzeugs auf der Basis eines Sensorsignals eines Sensors des Fahrzeugs, wobei die Steuerung ausgebildet ist, eine Fehlfunktion des Sensors des Fahrzeugs zu erfassen, und eine Kommunikationsschnittstelle 103, welche ausgebildet ist, ansprechend auf die Erfassung der Fehlfunktion des Sensors durch die Steuerung 101 ein Hilfssensorsignal über ein Kommunikationsnetzwerk anzufordern und das angeforderte Hilfssensorsignal über das Kommunikationsnetzwerk zu empfangen, wobei die Steuerung 101 ausgebildet ist, das Fahrzeug auf der Basis des empfangenen Hilfssensorsignals autonom zu führen.

Das Fahrzeugsteuersystem 100 kann Teil eines Fahrerassistenzsystems des Fahrzeugs sein oder ein Fahrerassistenzsystem des Fahrzeugs bilden. Das Fahrzeugsteuersystem 100 kann mit einem Aktor des Fahrzeugs zur Längsführung und/oder Querführung des Fahrzeugs verbunden sein. Das Fahrzeug kann beispielsweise ein Personenkraftwagen (PKW) oder ein Lastkraftwagen (LKW) sein.

Der Sensor des Fahrzeugs kann einen RADAR-Sensor (Radio Detection and Ranging Sensor), einen LIDAR-Sensor (Light Detection and Ranging Sensor), einen Ultraschall-Sensor, oder eine Bildkamera zum Erfassen einer Umgebung des Fahrzeugs umfassen. Die Fehlfunktion des Sensors kann ein teilweiser Defekt oder ein vollständiger Defekt des Sensors sein.

Das Kommunikationsnetzwerk kann ein ITS-G5 (Intelligent Transport Systems G5) Kommunikationsnetzwerk, ein Mobilfunk Kommunikationsnetzwerk, ein WLAN (Wireless Local Area Network) Kommunikationsnetzwerk, ein Bluetooth Kommunikationsnetzwerk oder ein UWB (Ultra Wide Band) Kommunikationsnetzwerk sein. Das Kommunikationsnetzwerk kann durch das Internet gebildet sein oder an das Internet angebunden sein.

Das Kommunikationsnetzwerk kann ferner einen Backend-Server umfassen. Eine Kommunikationsverbindung über das Kommunikationsnetzwerk kann über den Backend-Server durchgeführt werden.

Die autonome Führung des Fahrzeugs kann auf einer Sensordatenfusion basieren. Die autonome Führung des Fahrzeugs kann ferner auf einem Ansatz zur simultanen Lokalisierung und Kartenerstellung (Simultaneous Localization and Mapping, SLAM) basieren. Die autonome Führung des Fahrzeugs kann unter Verwendung des Sensorsignals oder des Hilfssensorsignals durchgeführt werden.

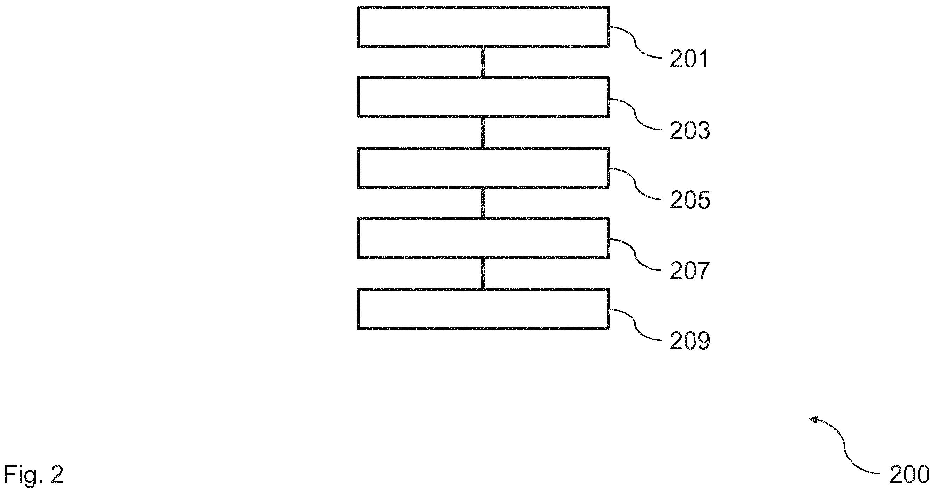

Fig. 2 zeigt ein Diagramm eines Verfahrens 200 für eine autonome Führung eines Fahrzeugs gemäß einer Ausführungsform.

Das Verfahren 200 umfasst ein autonomes Führen 201 des Fahrzeugs auf der Basis eines Sensorsignals eines Sensors des Fahrzeugs, ein Erfassen 203 einer Fehlfunktion des Sensors des Fahrzeugs, ansprechend auf die Erfassung der Fehlfunktion des Sensors, ein Anfordern 205 eines Hilfssensorsignals über ein Kommunikationsnetzwerk, ein Empfangen 207 des angeforderten Hilfssensorsignals über das Kommunikationsnetzwerk, und ein autonomes Führen 209 des Fahrzeugs auf der Basis des empfangenen Hilfssensorsignals.

Das Verfahren 200 kann mittels des Fahrzeugsteuersystems 100 ausgeführt werden. Weitere Merkmale des Verfahrens 200 ergeben sich unmittelbar aus der Funktionalität des Fahrzeugsteuersystems 100.

Das Fahrzeugsteuersystem 100 kann ein Computerprogramm mit einem Programmcode zur Durchführung des Verfahrens 200 ausführen. Das Fahrzeugsteuersystem 100 kann hierfür programmtechnisch eingerichtet sein.

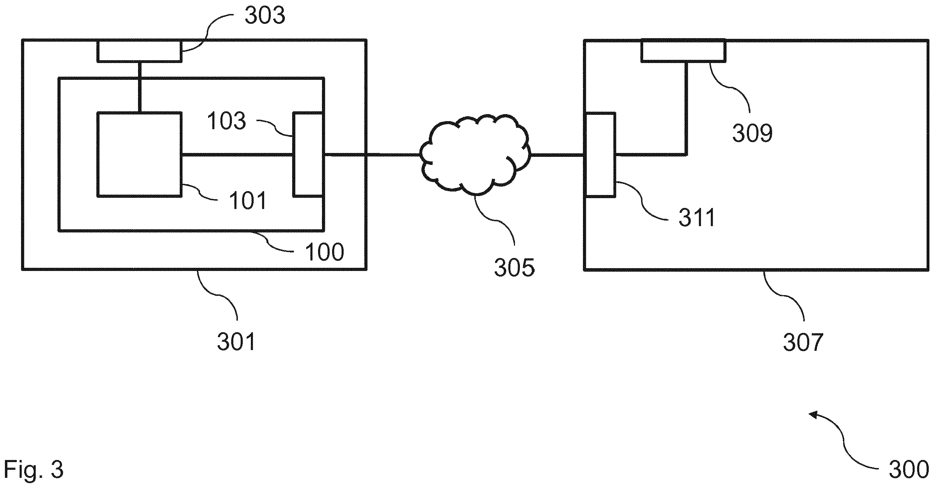

Fig. 3 zeigt ein Diagramm eines Kommunikationssystems 300 für eine autonome Führung eines Fahrzeugs 301 unter Verwendung eines Führungsfahrzeugs 307 gemäß einer Ausführungsform. Das Fahrzeug 301 ist über ein Kommunikationsnetzwerk 305 mit dem Führungsfahrzeug 307 verbunden.

Das Fahrzeug 301 umfasst ein Fahrzeugsteuersystem 100 für eine autonome Führung des Fahrzeugs 301 und einen Sensor 303. Das Fahrzeugsteuersystem 100 umfasst eine Steuerung 101 zum autonomen Führen des Fahrzeugs 301 auf der Basis eines Sensorsignals des Sensors 303 des Fahrzeugs 301, wobei die Steuerung 101 ausgebildet ist, eine Fehlfunktion des Sensors 303 des Fahrzeugs 301 zu erfassen, und eine Kommunikationsschnittstelle 103, welche ausgebildet ist, ansprechend auf die Erfassung der Fehlfunktion des Sensors 303 durch die Steuerung 101 ein Hilfssensorsignal über das Kommunikationsnetzwerk 305 anzufordern und das angeforderte Hilfssensorsignal über das Kommunikationsnetzwerk 305 zu empfangen, wobei die Steuerung 101 ausgebildet ist, das Fahrzeug 301 auf der Basis des empfangenen Hilfssensorsignals autonom zu führen.

Das Führungsfahrzeug 307 umfasst einen Hilfssensor 309 und eine weitere Kommunikationsschnittstelle 311. Der Hilfssensor 309 ist ausgebildet, das Hilfssensorsignal bereitzustellen. Die weitere Kommunikationsschnittstelle 311 ist ausgebildet, das Hilfssensorsignal von dem Führungsfahrzeug 307 an das Fahrzeug 301 für die autonome Führung des Fahrzeugs 301 zu übertragen.

Die autonome Führung des Fahrzeugs 301 kann auf einer Sensordatenfusion basieren. Die autonome Führung des Fahrzeugs 301 kann ferner auf einem Ansatz zur simultanen Lokalisierung und Kartenerstellung (Simultaneous Localization and Mapping, SLAM) basieren. Die autonome Führung des Fahrzeugs 301 kann unter Verwendung des Sensorsignals oder des Hilfssensorsignals durchgeführt werden.

Die Erfindung kann zur autonomen Führung eines Fahrzeugs unter Verwendung eines Führungsfahrzeugs oder eines Fremdfahrzeugs als Rückfallebene eingesetzt werden. Die autonome Fahrzeugführung kann mittels eines Fahrzeugsteuersystems als Fahrerassistenzsystem realisiert werden.

Es können grundsätzlich zwei Arten der Fahrzeugführung unterschieden werden: eine teilweise autonome Fahrzeugführung und eine vollständig autonome Fahrzeugführung. Bei der teilweise autonomen Fahrzeugführung kann ein Fahrer eines Fahrzeugs durch ein Fahrzeugsteuersystem unterstützt werden, wenn es die Verkehrssituation zulässt, wie beispielsweise bei einem Stauszenario, bei welchem das Fahrzeug mit geringer Geschwindigkeit vorwärts bewegt wird, oder bei einem Stop-and-Go Szenario. Bei der vollständig autonomen Fahrzeugführung kann der Fahrer eines Fahrzeugs durch ein Fahrzeugsteuersystem unterstützt werden, wobei das Fahrzeug ohne jegliches Zutun durch den Fahrer im Verkehr manövriert werden kann.

Fahrzeugsteuersysteme zur teilweise autonomen Fahrzeugführung können unterschiedlich ausgebildet sein. Sie sind dabei in erster Linie dafür vorgesehen, dem Fahrer das Führen eines Fahrzeugs zu erleichtern, sowie eine unterstützende Handlung zu gewähren, wenn dies erforderlich sein sollte, beispielsweise bei Unfallsituationen und/oder Unfallszenarien.

Beispielsweise kann ein Verfahren zum Betrieb eines Fahrzeugsteuersystems eingesetzt werden, bei welchem, bei einer unvermeidbaren Kollision, durch das System mittels einer Zieltrajektorie eine Folge einer möglichen Zweitkollision abgemildert oder vermieden werden kann, indem Längsführungseingriffe und/oder Querführungseingriffe vorgenommen werden, um die Realisierung und/oder Erlangung der Zieltrajektorie zu erreichen.

Ferner kann ein Verfahren zur Anpassung eines Steuerungsparameters eines Fahrzeugsteuersystems eingesetzt werden, bei welchem eine Anpassung in Abhängigkeit eines ermittelten Fahrzustandes erfolgen kann. Damit kann unangemessenen, übertriebenen, und/oder überreagierenden Handlungen eines Fahrers entgegengewirkt werden.

Ferner kann ein Verfahren zur Beeinflussung der Bewegung eines Fahrzeuges eingesetzt werden, bei welchem bei einem erkannten Unfall der Fahrzustand des Fahrzeugs fahrerunabhängig beeinflusst werden kann.

Ferner kann ein Verfahren zum sicheren Abstellen des Fahrzeugs eingesetzt werden, bei welchem überprüft wird, ob eine Notsituation vorliegt, wobei bei einer Erkennung einer Notsituation das Fahrzeugsteuersystem das Fahrzeug an einen Straßenrand führt.

Ferner kann ein Verfahren zum Betrieb eines Fahrzeugsteuersystems oder eines Stauassistenzsystems eingesetzt werden, bei welchem eine Entlastungsphase während einer autonomen Fahrt in einer Stausituation optimal verlängert werden kann.

Hinsichtlich vollständig autonomer Fahrzeugführung können Fahrzeugsteuersysteme ebenso unterschiedlich ausgebildet sein.

Beispielsweise kann ein Verfahren zur Steuerung des Betriebs eines vollautomatischen, zur unabhängigen Fahrzeugführung ausgebildeten Fahrzeugsteuersystems eines Kraftfahrzeugs eingesetzt werden. Dabei kann ein Plausibilitätsüberwachungsmodul unter ausschließlicher Berücksichtigung wenigstens eines Sensors und/oder eines Fahrzeugsystems eine Plausibilität ermitteln, und den aktuellen Betriebszustand des Fahrzeugs beschreibende Ego-Daten und/oder Umfeld-Daten dahingehend überprüfen, ob ein im Hinblick auf die Funktionalität des Fahrzeugsteuersystems ausgeschlossener Fehlerfall vorliegt. Bei Vorliegen eines Fehlerfalls kann ein zur Überführung des Fahrzeugs in einen definierten Zustand dienender Fahreingriff auf Grundlage eines Aktionsplans ausgeführt werden, welcher einen zeitlichen Ablauf von Steuerungsbefehlen umfassen kann.

Ferner kann ein Verfahren für ein Fahrzeugsteuersystem zur autonomen Längs- und/oder Querführung oder -regelung eines Fahrzeugs eingesetzt werden, wobei eine Regelungsaufgabe zur Längs- und/oder Querführung oder -regelung des Fahrzeugs von einem Fahrer des Fahrzeugs an das Fahrzeugsteuersystem übergeben werden kann.

Ferner kann ein Verfahren zur Steuerung des Betriebs eines vollautomatischen, zur unabhängigen Fahrzeugführung ausgebildeten Fahrzeugsteuersystems eines Kraftfahrzeugs eingesetzt werden, wobei eine Überführung des Fahrzeugs in einen definierten Zustand, beispielsweise ein Anhalten des Fahrzeugs, angestrebt wird, wenn der Fahrer des Fahrzeugs einer Übernahmeanforderung zur Fahrzeugführung nicht nachkommt.

Das Fahrzeugsteuersystem kann dabei zumindest einen umgebungserfassenden, beispielsweise bildgenerierenden, Sensor, beispielsweise eine Bildkamera, umfassen, wobei die ermittelten Sensorsignale oder Sensordaten mit weiteren zusätzlichen umgebungserfassenden Sensorsignalen oder Sensordaten unter Verwendung einer Sensordatenfusion verarbeitet und/oder fusioniert werden können. Die Sensordatenfusion kann mittels eines Sensordatenfusionierers durchgeführt werden.

Bei Verfahren und Systemen zur Fahrzeugführung ist von besonderem Interesse, welcher Zustand erreicht wird und/oder welche Reaktion ausgeführt wird, wenn eine Fehlfunktion bei der Sensordatenfusion oder eine Fehlfunktion bei einem umgebungserfassenden Sensor, insbesondere einem bildgenerierenden Sensor, vorliegt.

Eine derartige Fehlfunktion kann dabei beispielsweise plötzlich während einer Fahrt bei hoher Fahrzeuggeschwindigkeit und/oder sporadisch auftreten. Eine Fehlfunktion oder ein Ausfall eines umgebungserfassenden, beispielsweise bildgenerierenden, Sensors, beispielsweise einer Bildkamera, kann dazu führen, dass das Fahrzeugsteuersystem blind wird, und/oder dass die Sensorsignale oder Sensordaten nur unvollständig fusioniert werden können.

Diese Herausforderung kann folgendermaßen gelöst werden. Bei einer Erkennung oder Feststellung einer Fehlfunktion kann das Fahrzeugsteuersystem zunächst versuchen, den Fahrer des Fahrzeugs mit geeigneten Mitteln zur Fahrzeugführung aufzufordern, damit dieser die Fahrzeugführung wieder vollständig übernehmen kann. Zeigt der Fahrer des Fahrzeugs hierauf keine Reaktion, beispielsweise bis zur Erkennung einer Reaktion, kann das Fahrzeug durch das Fahrzeugsteuersystem abgebremst und zum Stillstand gebracht werden.

Bei einer hohen Verkehrsdichte oder Marktdurchdringung von Fahrzeugen mit autonomer Fahrzeugführung kann jedoch die Anzahl von ausfallenden Fahrzeugen ansteigen. Falls der Fahrer des Fahrzeugs einer Fahrzeugübernahmeanforderung nicht nachkommt, kann ferner auf ein gesundheitliches Problem des Fahrers geschlossen werden, welches einer schnellen gesundheitlichen Hilfsmaßnahme bedarf. Durch einen Stillstand des Fahrzeugs, beispielsweise auf einer Autobahn, kann eine zeitnahe Hilfeleistung jedoch verzögert werden.

Diese Herausforderung kann dadurch gelöst werden, dass das Fahrzeugsteuersystem unter Verwendung einer X-zu-X und/oder Fahrzeug-zu-Fahrzeug Kommunikation in der Umgebung des Fahrzeugs ein Führungsfahrzeug sucht, falls der Fahrer des Fahrzeugs der Fahrzeugübernahmeaufforderung nicht nachkommt.

Das Führungsfahrzeug kann als Leitfahrzeug eine Funktion als Ersatzrückfallebene übernehmen, und das Fahrzeug an eine Stelle, beispielsweise einen Rasthof, führen, an welcher beispielsweise Rettungskräfte einen leichten Zugang haben. Folglich kann ein elektronisches Abschleppen des Fahrzeugs durch ein fremdes Führungsfahrzeug realisiert werden.

Der Fahrer des vom Fahrzeug kontaktierten Führungsfahrzeugs, kann dabei die Rolle, die Aufgabe, oder die Funktion des elektronisch abschleppenden Führungsfahrzeugs bestätigen. Dadurch können Irritationen der Fahrer minimiert werden. Ferner kann der Fahrer des Führungsfahrzeugs seiner Rolle mit einer angepassten Fahrweise nachkommen.

Gleichzeitig oder parallel zum elektronischen Abschleppvorgang kann eine Rettungsleitstelle kontaktiert und/oder informiert werden, damit am Zielort, zu welchem das Fahrzeug abgeschleppt wird, beispielsweise frühzeitig ein Rettungsteam geschickt werden kann. Dadurch wird eine schnelle Hilfeleistung durch einen Rettungsdienst ermöglicht.

Falls der Fahrer des Fahrzeugs der Fahrzeugübernahmeaufforderung also nicht nachkommt, kann das Fahrzeugsteuersystem unter Verwendung einer X-zu-X und/oder Fahrzeug-zu-Fahrzeug Kommunikation in der Umgebung des Fahrzeugs ein Führungsfahrzeug suchen, welches als Leitfahrzeug eine Funktion als Ersatzrückfallebene übernehmen kann, und das Fahrzeug an eine Stelle, beispielsweise einen Rasthof, führen, an welcher beispielsweise Rettungskräfte einen leichten Zugang haben. Dadurch kann ein elektronisches Abschleppen des Fahrzeugs durch das Führungsfahrzeug sowie eine schnelle Hilfeleistung durch einen Rettungsdienst realisiert werden.

Das Fahrzeugsteuersystem kann zum hochautomatisierten Fahren (HAF) des Fahrzeugs eingesetzt werden. Das Fahrzeugsteuersystem kann dabei unter Verwendung einer Fahrzeug-zu-X (Vehicle-2-X, V2X) Kommunikation realisiert werden.

Eine Erfassung einer Umgebung des Fahrzeugs kann mittels Sensoren, beispielsweise RADAR-Sensoren, Bildkamera-Sensoren, oder LIDAR-Sensoren, realisiert werden. Unter Verwendung einer Fusion von Sensorsignalen oder Sensordaten verschiedener Sensoren können höherwertige Führungsfunktionen, beispielsweise eine Baustellenassistenzfunktion oder eine automatisch Notbremsung des Fahrzeugs, realisiert werden.

Ein Aspekt der autonomen Fahrzeugführung ist die Rückfallstrategie für jene Fälle, in denen das Fahrzeugsteuersystem die Fahrsituation nicht alleine bewältigen kann, beispielsweise wenn im Fahrzeugsteuersystem eine Fehlfunktion oder ein technischer Defekt aufgetreten ist, und/oder Teile der Sensorsignale oder Sensordaten für die autonome Fahrzeugführung nicht mehr zur Verfügung stehen.

Ein Ansatz besteht in der Übergabe der Fahrverantwortung, beispielsweise zum Lenken, Bremsen, und Beschleunigen, an den Fahrer. Da der Fahrer abgelenkt sein kann, kann eine Fahrzeugübernahmezeit von mehreren Sekunden bis zu einer halben Minute angenommen werden, bis der Fahrer die Führung des Fahrzeugs tatsächlich übernehmen kann.

Wenn der Fahrer absichtlich oder unabsichtlich die Fahrzeugführung oder Fahrzeugkontrolle nicht übernimmt, kann sich das autonom geführte Fahrzeug mittels Sensoren zur Umgebungserfassung und/oder eines Kommunikationsnetzwerks an ein vorausfahrendes Führungsfahrzeug virtuell ankoppeln und sich von diesem zu einer nächsten verfügbaren Haltestelle abschleppen lassen. Dieses Konzept kann auf mehrere Weisen erweitert werden.

Eine Aktivierung des Führungs- oder Abschleppmodus kann im Fahrzeug und/oder im Führungsfahrzeug optisch und/oder akustisch angezeigt werden, damit die jeweiligen Fahrer und gegebenenfalls die jeweiligen Beifahrer über die Situation informiert werden. Diese können dann Maßnahmen ergreifen, welche über die automatischen Funktionen des Fahrzeug und/oder des Führungsfahrzeugs hinausgehen, beispielsweise ein Wecken eines Fahrers, oder die Benachrichtigung eines Notarztes.

Der Führungs- oder Abschleppmodus kann auf einer Restfunktionalität der autonomen Fahrzeugführung basieren. Das bedeutet, dass der Führungs- oder Abschleppmodus unter Verwendung eines Teils der Sensoren zur Erfassung der Umgebung des Fahrzeugs realisiert werden kann. Beispielsweise kann das Fahrzeug dem Führungsfahrzeug folgen, wenn die Bildkameras der Sensorik zur autonomen Fahrzeugführung ausgefallen sind, jedoch ein RADAR-Sensor noch funktioniert. Das Fahrzeugsteuersystem zur autonomen Fahrzeugführung kann vor dem Rückfall in den Führungs- oder Abschleppmodus analysieren, ob die Restfunktionalität des Fahrzeugs hierfür ausreicht.

Zum virtuellen Führen oder Abschleppen des Fahrzeugs durch das Führungsfahrzeug auf Grundlage der Fahrzeug-zu-X (Car2X) Kommunikation kann eine Informationsredundanz über die Umgebung des Fahrzeugs berücksichtigt werden.

Das führende oder abschleppende Führungsfahrzeug kann Fahreigenschaften des geführten oder abgeschleppten Fahrzeugs berücksichtigen. Um eine Verfolgung des Führungsfahrzeugs durch das Fahrzeug zu ermöglichen, kann eine Verringerung der Geschwindigkeit und/oder eine Anpassung der Fahrdynamik des Fahrzeugs oder des Führungsfahrzeugs durchgeführt werden. Dies kann durch das Fahrzeug und das Führungsfahrzeug über eine Kommunikationsverbindung ausgehandelt werden. Dabei kann die Restfunktionalität des geführten oder abgeschleppten Fahrzeugs berücksichtigt werden.

Ferner kann das führende oder abschleppende Führungsfahrzeug zur Unterstützung des geführten oder abgeschleppten Fahrzeugs lokal vorliegenden Informationen über die Umgebung des Fahrzeugs und/oder des Führungsfahrzeugs an das geführte oder abgeschleppte Fahrzeug weiterleiten.

Für die Kommunikation zwischen dem Fahrzeug und dem Führungsfahrzeug können verschiedene Kommunikationstechnologien, beispielsweise ITS-G5, LTE, WLAN, Bluetooth oder UWB, eingesetzt werden. Die Kommunikationsverbindung zwischen dem Fahrzeug und dem Führungsfahrzeug kann latenzarm, stabil und/oder authentifizierbar sein.

Folglich kann eine Rückfallebene für die autonome Fahrzeugführung realisiert werden, welche eine Anzahl von Unfällen und/oder Verkehrsbehinderungen reduzieren kann.

Hilfsweise kann das Fahrzeugsteuersystem zur autonomen Fahrzeugführung bei einer Fehlfunktion oder einem Defekt oder einer nicht-übernommenen Fahrverantwortung durch den Fahrer eine automatische Abbremsung bis zum Stillstand des Fahrzeugs durchführen.

### BEZUGSZEICHENLISTE

- 100: Fahrzeugsteuersystem
- 101: Steuerung
- 103: Kommunikationsschnittstelle
- 200: Verfahren für eine autonome Führung eines Fahrzeugs
- 201: Autonomes Führen des Fahrzeugs
- 203: Erfassen einer Fehlfunktion
- 205: Anfordern eines Hilfssensorsignals
- 207: Empfangen des angeforderten Hilfssensorsignals
- 209: Autonomes Führen des Fahrzeugs
- 300: Kommunikationssystem
- 301: Fahrzeug
- 303: Sensor
- 305: Kommunikationsnetzwerk
- 307: Führungsfahrzeug
- 309: Hilfssensor
- 311: Weitere Kommunikationsschnittstelle

## Patentansprüche

1. Fahrzeugsteuersystem (100) für eine autonome Führung eines Fahrzeugs (301), mit:
einer Steuerung (101) zum autonomen Führen des Fahrzeugs (301) auf der Basis eines Sensorsignals eines Sensors (303) des Fahrzeugs (301), wobei die Steuerung (101) ausgebildet ist, eine Fehlfunktion des Sensors (303) des Fahrzeugs (301) zu erfassen; **gekennzeichnet durch**,
eine Kommunikationsschnittstelle (103), welche ausgebildet ist, ansprechend auf die Erfassung der Fehlfunktion des Sensors (303) durch die Steuerung (101) ein Hilfssensorsignal über ein Kommunikationsnetzwerk (305) anzufordern und das angeforderte Hilfssensorsignal über das Kommunikationsnetzwerk (305) zu empfangen;
wobei die Steuerung (101) ausgebildet ist, das Fahrzeug (301) auf der Basis des empfangenen Hilfssensorsignals autonom zu führen.

2. Fahrzeugsteuersystem (100) nach Anspruch 1, wobei die Steuerung (101) eine Sensorschnittstelle zum Empfangen des Sensorsignals aufweist und ausgebildet ist, die Fehlfunktion des Sensors (303) des Fahrzeugs (301) bei Ausbleiben eines Empfangs des Sensorsignals zu erfassen.

3. Fahrzeugsteuersystem (100) nach einem der vorstehenden Ansprüche, wobei die Kommunikationsschnittstelle (103) ausgebildet ist, das Hilfssensorsignal über das Kommunikationsnetzwerk (305) von einem Führungsfahrzeug (307) anzufordern und das Hilfssensorsignal über das Kommunikationsnetzwerk (305) von dem Führungsfahrzeug (307) zu empfangen.

4. Fahrzeugsteuersystem (100) nach einem der vorstehenden Ansprüche, wobei die Steuerung (101) ausgebildet ist, eine Mehrzahl geographischer Lagen einer Mehrzahl von Fahrzeugen in der Umgebung des Fahrzeugs (301) zu erfassen und ein Führungsfahrzeug (307) aus der Mehrzahl von Fahrzeugen auf Basis der Mehrzahl geographischer Lagen auszuwählen.

5. Fahrzeugsteuersystem (100) nach Anspruch 4, wobei die Kommunikationsschnittstelle (103) ausgebildet ist, eine Mehrzahl von Lageindikatoren über das Kommunikationsnetzwerk (305) zu empfangen, wobei die Mehrzahl von Lageindikatoren die Mehrzahl geographischer Lagen der Mehrzahl von Fahrzeugen anzeigt, und wobei die Steuerung (101) ausgebildet ist, die Mehrzahl geographischer Lagen auf der Basis der Mehrzahl von Lageindikatoren zu erfassen.

6. Fahrzeugsteuersystem (100) nach einem der vorstehenden Ansprüche, wobei die Kommunikationsschnittstelle (103) ausgebildet ist, einen Fahrroutenindikator von einem Führungsfahrzeug (307) über das Kommunikationsnetzwerk (305) zu empfangen, wobei der Fahrroutenindikator eine Fahrroute des Führungsfahrzeugs (307) angibt, und wobei die Steuerung (101) ausgebildet ist, eine Fahrroute des Fahrzeugs (301) auf der Basis des Fahrroutenindikators autonom zu bestimmen.

7. Fahrzeugsteuersystem (100) nach einem der vorstehenden Ansprüche, wobei die Steuerung (101) ausgebildet ist, einen Grad der Fehlfunktion des Sensors (303) zu erfassen, um einen Fehlfunktionsgradindikator zu erhalten, und wobei die Kommunikationsschnittstelle (103) ausgebildet ist, den Fehlfunktionsgradindikator über das Kommunikationsnetzwerk (305) zusammen mit der Anforderung des Hilfssensorsignals auszusenden.

8. Fahrzeugsteuersystem (100) nach einem der vorstehenden Ansprüche, wobei die Kommunikationsschnittstelle (103) ausgebildet ist, eine authentifizierte oder verschlüsselte Kommunikationsverbindung über das Kommunikationsnetzwerk (305), insbesondere zwischen dem Fahrzeug (301) und einem Führungsfahrzeug (307), aufzubauen.

9. Fahrzeugsteuersystem (100) nach einem der vorstehenden Ansprüche, wobei das Fahrzeug (301) einen weiteren Sensor umfasst, und wobei die Steuerung (101) ausgebildet ist, das Fahrzeug (301) auf der Basis eines weiteren Sensorsignals des weiteren Sensors des Fahrzeugs (301) autonom zu führen.

10. Fahrzeugsteuersystem (100) nach einem der vorstehenden Ansprüche, wobei die Steuerung (101) ausgebildet ist, ansprechend auf die Erfassung der Fehlfunktion des Sensors (303) einen Fehlfunktionsindikator zu erzeugen, welcher die Fehlfunktion des Sensors (303) anzeigt, und wobei die Kommunikationsschnittstelle (103) ausgebildet ist, den Fehlfunktionsindikator über das Kommunikationsnetzwerk (305) an einen Backend-Server auszusenden.

11. Fahrzeugsteuersystem (100) nach einem der vorstehenden Ansprüche, wobei das Sensorsignal oder das Hilfssensorsignal ein RADAR-Sensorsignal, ein LIDAR-Sensorsignal, ein Ultraschall-Sensorsignal, oder ein Bildkamera-Sensorsignal umfasst.

12. Fahrzeugsteuersystem (100) nach einem der vorstehenden Ansprüche, wobei die Kommunikationsschnittstelle (103) eine ITS-G5 Kommunikationsschnittstelle, eine Mobilfunk Kommunikationsschnittstelle, eine WLAN Kommunikationsschnittstelle, eine Bluetooth Kommunikationsschnittstelle, oder eine UWB Kommunikationsschnittstelle umfasst.

13. Verfahren (200) für eine autonome Führung eines Fahrzeugs (301), mit:
autonomen Führen (201) des Fahrzeugs (301) auf der Basis eines Sensorsignals eines Sensors (303) des Fahrzeugs (301);
Erfassen (203) einer Fehlfunktion des Sensors (303) des Fahrzeugs (301); **gekennzeichnet durch**,
ansprechend auf die Erfassung der Fehlfunktion des Sensors (303), Anfordern (205) eines Hilfssensorsignals über ein Kommunikationsnetzwerk (305);
Empfangen (207) des angeforderten Hilfssensorsignals über das Kommunikationsnetzwerk (305); und
autonomen Führen (209) des Fahrzeugs (301) auf der Basis des empfangenen Hilfssensorsignals.

14. Verfahren (200) nach Anspruch 13, wobei das Hilfssensorsignal über das Kommunikationsnetzwerk (305) von einem Führungsfahrzeug (307) angefordert wird, und wobei das Hilfssensorsignal über das Kommunikationsnetzwerk (305) von dem Führungsfahrzeug (307) empfangen wird.

15. Computerprogramm mit einem Programmcode zum Ausführen des Verfahrens (200) nach Anspruch 13 oder 14, wenn das Computerprogramm auf einem Computer ausgeführt wird.

## Claims

1. A vehicle control system (100) for autonomously guiding a vehicle (301), having a controller (101) for autonomously guiding the vehicle (301) on the basis of a sensor signal of a sensor (303) of the vehicle (301), wherein the controller (101) is designed to detect a malfunction of the sensor (303) of the vehicle (301); **characterised by** a communications interface (103) which is designed to request an auxiliary sensor signal via a communication network (305) in response to the detection of the malfunction of the sensor (303) by the controller (101) and to receive the requested auxiliary sensor signal via the communication network (305); wherein the controller (101) is designed to guide the vehicle (301) autonomously on the basis of the received auxiliary sensor signal.

2. The vehicle control system (100) of claim 1, wherein the controller (101) has a sensor interface for receiving the sensor signal and is designed to detect the malfunction of the sensor (303) of the vehicle (301) in the absence of receipt of the sensor signal.

3. The vehicle control system (100) of any one of the preceding claims, wherein the communications interface (103) is designed to request the auxiliary sensor signal via the communication network (305) from a lead vehicle (307) and to receive the auxiliary sensor signal via the communication network (305) from the lead vehicle (307).

4. The vehicle control system (100) of any one of the preceding claims, wherein the controller (101) is designed to detect a plurality of geographical positions of a plurality of vehicles in the environment of the vehicle (301) and to select a lead vehicle (307) from the plurality of vehicles based on the plurality of geographical positions.

5. The vehicle control system (100) of claim 4, wherein the communications interface (103) is designed to receive a plurality of position indicators via the communication network (305), wherein the plurality of position indicators shows the plurality of geographical positions of the plurality of vehicles, and wherein the controller (101) is designed to detect the plurality of geographical positions based on the plurality of position indicators.

6. The vehicle control system (100) of any one of the preceding claims, wherein the communications interface (103) is designed to receive a route indicator from a lead vehicle (307) via the communication network (305), wherein the route indicator indicates a route of the lead vehicle (307), and wherein the controller (101) is designed to autonomously determine a route of the vehicle (301) based on the route indicator.

7. The vehicle control system (100) of any one of the preceding claims, wherein the controller (101) is designed to detect a level of the malfunction of the sensor (303), in order to receive a malfunction level indicator, and wherein the communications interface (103) is designed to send out the malfunction level indicator via the communication network (305) together with the request for the auxiliary sensor signal.

8. The vehicle control system (100) of any one of the preceding claims, wherein the communications interface (103) is designed to establish an authenticated or encrypted communications link via the communication network (305), in particular between the vehicle (301) and a lead vehicle (307).

9. The vehicle control system (100) of any one of the preceding claims, wherein the vehicle (301) comprises a further sensor, and wherein the controller (101) is designed to autonomously guide the vehicle (301) based on a further sensor signal of the further sensor of the vehicle (301).

10. The vehicle control system (100) of any one of the preceding claims, wherein the controller (101) is designed, in response to the detection of the malfunction of the sensor (303), to generate a malfunction indicator which indicates the malfunction of the sensor (303), and wherein the communications interface (103) is designed to send out the malfunction indicator via the communication network (305) to a backend server.

11. The vehicle control system (100) of any one of the preceding claims, wherein the sensor signal or the auxiliary sensor signal comprises a RADAR sensor signal, a LIDAR sensor signal, an ultrasound sensor signal, or an imaging camera sensor signal.

12. The vehicle control system (100) of any one of the preceding claims, wherein the communications interface (103) comprises an ITS-G5 communications interface, a mobile telephony communications interface, a WLAN communications interface, a Bluetooth communications interface, or a UWB communications interface.

13. A method (200) for autonomously guiding a vehicle (301), having:
autonomous guidance (201) of the vehicle (301) based on a sensor signal of a sensor (303) of the vehicle (301);
detection (203) of a malfunction of the sensor (303) of the vehicle (301); **characterised by** requesting (205) an auxiliary signal via a communication network (305) in response to the detection of the malfunction of the sensor (303);
receipt (207) of the requested auxiliary sensor signal via the communication network (305); and autonomous guidance (209) of the vehicle (301) based on the received auxiliary sensor signal.

14. The method (200) of claim 13, wherein the auxiliary sensor signal is requested via the communication network (305) from a lead vehicle (307), and wherein the auxiliary sensor signal is received via the communication network (305) from the lead vehicle (307).

15. A computer program having a program code for executing the method (200) of claim 13 or 14, if the computer program is executed on a computer.

## Revendications

1. Système de commande de véhicule (100) pour un guidage autonome d'un véhicule (301), avec :
une commande (101) pour le guidage autonome du véhicule (301) sur la base d'un signal de capteur d'un capteur (303) du véhicule (301), la commande (101) étant formée afin de détecter une défaillance du capteur (303) du véhicule (301) ; **caractérisé par**
une interface de communication (103), laquelle est formée afin de demander un signal de capteur auxiliaire par un réseau de communication (305) en réponse à la détection de la défaillance du capteur (303) par la commande (101), et de recevoir le signal de capteur auxiliaire demandé par le réseau de communication (305) ;
la commande (101) étant formée afin de guider de façon autonome le véhicule (301) sur la base du signal de capteur auxiliaire reçu.

2. Système de commande de véhicule (100) selon la revendication 1, la commande (101) présentant une interface de capteur pour la réception du signal de capteur et étant formée afin de détecter la défaillance du capteur (303) du véhicule (301) en l'absence d'une réception du signal de capteur.

3. Système de commande de véhicule (100) selon l'une des revendications précédentes, l'interface de communication (103) étant formée afin de demander le signal de capteur auxiliaire par le réseau de communication (305) à un véhicule de guidage (307) et à recevoir le signal de capteur auxiliaire par le réseau de communication (305) par le véhicule de guidage (307).

4. Système de commande de véhicule (100) selon l'une des revendications précédentes, la commande (101) étant formée afin de détecter une multiplicité de situations géographiques d'une multiplicité de véhicules dans l'environnement du véhicule (301) et de sélectionner un véhicule de guidage (307) à partir de la multiplicité de véhicules sur la base de la multiplicité des situations géographiques.

5. Système de commande de véhicule (100) selon la revendication 4, l'interface de communication (103) étant formée afin de recevoir une multiplicité d'indicateurs de situations par le réseau de communication (305), la multiplicité d'indicateurs de situations indiquant la multiplicité de situations géographiques de la multiplicité de véhicules, et la commande (101) étant formée afin de détecter la multiplicité de situations géographiques sur la base de la multiplicité d'indicateurs de situations.

6. Système de commande de véhicule (100) selon l'une des revendications précédentes, l'interface de communication (103) étant formée afin de recevoir un indicateur d'itinéraire d'un véhicule de guidage (307) par le réseau de communication (305), l'indicateur d'itinéraire indiquant un itinéraire du véhicule de guidage (307), et la commande (101) étant formée afin de déterminer de façon autonome un itinéraire du véhicule (301) sur la base de l'indicateur d'itinéraire.

7. Système de commande de véhicule (100) selon l'une des revendications précédentes, la commande (101) étant formée afin de détecter un degré de défaillance du capteur (303), pour recevoir un indicateur de degré de défaillance, et l'interface de communication (103) étant formée afin d'émettre l'indicateur de degré de défaillance par le réseau de communication (305) conjointement avec la demande du signal de capteur auxiliaire.

8. Système de commande de véhicule (100) selon l'une des revendications précédentes, l'interface de communication (103) étant formée afin d'établir une connexion de communication authentifiée ou cryptée par le réseau de communication (305), en particulier entre le véhicule (301) et un véhicule de guidage (307).

9. Système de commande de véhicule (100) selon l'une des revendications précédentes, le véhicule (301) comprenant un capteur supplémentaire, et la commande (101) étant formée afin de guider de façon autonome le véhicule (301) sur la base d'un signal de capteur supplémentaire du capteur supplémentaire du véhicule (301).

10. Système de commande de véhicule (100) selon l'une des revendications précédentes, la commande (101) étant formée afin de générer un indicateur de défaillance en réponse à la détection de la défaillance du capteur (303), lequel indique la défaillance du capteur (303), et l'interface de communication (103) étant formée afin d'envoyer l'indicateur de défaillance par le réseau de communication (305) à un serveur back-end.

11. Système de commande de véhicule (100) selon l'une des revendications précédentes, le signal de capteur ou le signal de capteur auxiliaire comprenant un signal de capteur RADAR, un signal de capteur LIDAR, un signal de capteur à ultrasons ou un signal de capteur de caméra.

12. Système de commande de véhicule (100) selon l'une des revendications précédentes, l'interface de communication (103) étant une interface de communication ITS-G5, une interface de communication de téléphonie mobile, une interface de communication de réseau sans fil, une interface de communication Bluetooth, ou une interface de communication ULB.

13. Procédé (200) pour un guidage autonome d'un véhicule (301), avec :
le guidage autonome (201) du véhicule (301) sur la base d'un signal de capteur d'un capteur (303) du véhicule (301) ;
la détection (203) d'une défaillance du capteur (303) du véhicule (301) ; **caractérisé par**
la demande (205) d'un signal de capteur auxiliaire par un réseau de communication (305), en réponse à la détection de la défaillance du capteur (303) ;
la réception (207) du signal de capteur auxiliaire demandé par le réseau de communication (305) ; et
le guidage autonome (209) du véhicule (301) sur la base du signal de capteur auxiliaire reçu.

14. Procédé (200) selon la revendication 13, le signal de capteur auxiliaire étant demandé par le réseau de communication (305) par un véhicule de guidage (307), et le signal de capteur auxiliaire étant reçu par le réseau de communication (305) par le véhicule de guidage (307).

15. Programme d'ordinateur avec un code de programme pour l'exécution du procédé (200) selon la revendication 13 ou 14, lorsque le programme d'ordinateur est exécuté sur un ordinateur.
